# EUROPÄISCHE PATENTSCHRIFT

(11) **EP 1 954 503 B1**
(45) Veröffentlichungstag und Bekanntmachung des Hinweises auf die Patenterteilung: **17.07.2013**
(21) Anmeldenummer: 06817721.1
(22) Anmeldetag: 27.11.2006
(51) Int. Cl.: B41K 1/28

(54) **VORRICHTUNG ZUM BEDRUCKEN VON GEFLÜGELEIERN**
APPARATUS FOR PRINTING POULTRY EGGS
DISPOSITIF D'IMPRESSION D'OEUFS DE VOLAILLE

(30) Priorität: 01.12.2005 CH 19062005
(43) Veröffentlichungstag der Anmeldung: 13.08.2008
(73) Patentinhaber: Nuovo AG, 8330 Pfäffikon (CH)
(72) Erfinder: ISLER, Werner, CH-8330 Pfäffikon (CH)
(74) Vertreter: Schneider Feldmann AG Patent- und Markenanwälte
(86) Internationale Anmeldenummer: PCT/CH2006/000664
(87) Internationale Veröffentlichungsnummer: WO 2007/062539

(56) Entgegenhaltungen:
- EP-A2- 1 457 108
- GB-A- 356 770
- GB-A- 1 218 895
- US-A- 3 094 920

## Beschreibung

### Technisches Gebiet

Die vorliegende Erfindung beschreibt eine Vorrichtung zum bedrucken von unebenen Oberflächen, insbesondere von Agrarprodukten, wie Geflügeleiern, im Durchdruckverfahren mittels einem Stempelkopf, in welchem ein Tampon mit einer Stempelfarbe untergebracht ist und der durch ein Siebdruckplättchen abgeschlossen ist.

### Stand der Technik

Druckvorrichtungen zum Bedrucken von unebenen Oberflächen und von Geflügeleiern sind schon lange bekannt.

Der in DE70607 beschriebene Eierstempler ist aus einem Hohlzylinder aufgebaut, der an einem Ende durch eine Stempelfläche aus verformbaren Material abgeschlossen ist. Diese Stempelfläche ist konkav geformt, ragt in das Volumen des Hohlzylinders und weist erhabene Zeichen auf. Im Inneren des Hohlzylinders befindet sich ein Kolben, dessen Durchmesser so gewählt ist, dass er formschlüssig in dem Hohlzylinder bewegbar ist. Wenn der Kolben bis zum Anschlag in den Hohlzylinder gesteckt ist, dann drückt der Kolben auf die Rückseite der Stempelfläche, so dass die Stempelfläche eine ebene Fläche bildet. Die Stempelfarbe kann dann durch aufdrücken des Eierstemplers auf ein Stempelkissen aufgenommen werden. Beim Stempelvorgang wird der Hohlzylinder gehalten und die Stempelfläche auf die Oberfläche des Eis gepresst, die Zeichen der Stempelfläche werden dabei auf das Ei gedruckt. Die Stempelfläche schmiegt sich an die Oberfläche des Eis an, wodurch ein gutes Druckbild entsteht. Dieser Stempelvorgang entspricht einem Hochdruckverfahren.

Diese Vorrichtung kann nur manuell betätigt werden, was eine variable und nicht reproduzierbare Anpresskraft zur Folge hat. Um gute Stempelergebnisse zu erhalten scheint es eine Rolle zu spielen, dass der Durchmesser des Hohlzylinders und die konkave Krümmung der Stempelfläche auf die Oberfläche des Eies abgestimmt wird.

Ein weiterer Ansatz zum Bedrucken von unebenen Oberflächen wird in GB191121471 verfolgt, indem eine Schablonendruckvorrichtung zum beschriften von Tieren beschrieben wird, die mit einem Druckfarbenbehälter kombiniert ist. Der zylindrisch geformte Druckfarbenbehälter mit rundem Querschnitt ist auf einer Seite mit einer Schablone versehen, die aufgesteckt oder aufgeschraubt wird. Die gegenüberliegende Seite des Behälters ist mit einem Deckel verschlossen, durch den ein Kolben konzentrisch und beweglich gesteckt ist, der im Behälterinneren die Stempelfarbe durch einen Kolbenring in Richtung der Schablone presst.
Vor dem Stempelvorgang wird der Kolben samt Deckel vom Druckfarbenbehälter entfernt, damit die Stempelfarbe eingefüllt werden kann. Anschliessend wird der Kolben und der Deckel wieder aufgesteckt und der Farbenbehälter auf der zu bedruckenden Fläche positioniert. Dann wird der Kolben in Richtung der Schablone gedrückt, wodurch die Stempelfarbe durch die Schablone gedrückt wird und die gewünschten Zeichen auf der Fläche abbildet.
Auch dieser Stand der Technik beschreibt ein manuelles Bedrucken von unebenen Oberflächen und damit eine nicht reproduzierbare Anpresskraft der Schablone auf die Druckoberfläche. Bei den Druckvorgängen wird dadurch unterschiedlich viel Druckfarbe auf die Druckoberfläche aufgebracht.

EP1457108 beschreibt einen Stempel aus einem ausgehöhlten und rotationssymmetrischen Behälter aus einem weichen Kunststoff oder Kautschuk, an dessen Unterseite eine beschichtete, konvexe und flexible Membran befestigt ist, die den Stempel so abschliesst, dass das Innere des Stempels mit einer Stempelfarbe gefüllt werden kann. Die Membran ist mit einer Folie überzogen, in welche eine Struktur photochemisch geätzt ist, die das Stempelmotiv bildet. Die Stempelfarbe wandert beim Stempeln durch die Struktur und gelangt auf die Eioberfläche.

Neben zwei Löchern auf der Oberseite des Stempels zum Befüllen des Stempels mit der Stempelfarbe, ist eine Bohrung zur Befestigung des Stempels auf einem Balken in einer Stempelapparatur vorgesehen. In einer solchen Apparatur können mehrere Stempel in Reihe angeordnet werden und durch Senken des Balkens können mehrere Geflügeleier gleichzeitig bedruckt werden. Die Lösung zeigt einen Eierstempel der im Tampondruckverfahren arbeitet und als Einwegsystem konzipiert ist. Ein Auswechseln des Stempelmotives ist nicht vorgesehen.

### Darstellung der Erfindung

Die vorliegende Erfindung hat sich zur Aufgabe gestellt einen Stempelkopf zu schaffen, der sich durch einfaches und schnelles Nachfüllen der Stempelfarbe und Auswechslung des Siebdruckplättchens ohne Stempeldemontage auszeichnet. Desweiteren hat der Pegelstand der Stempelfarbe beim hier beschriebenen Stempelkopf keinen Einfluss auf die Abgabemenge Der Stempelfarbe.

### Kurze Beschreibung der Zeichnungen

Die Erfindung wird nachstehend im Zusammenhang mit den Zeichnungen beschrieben.

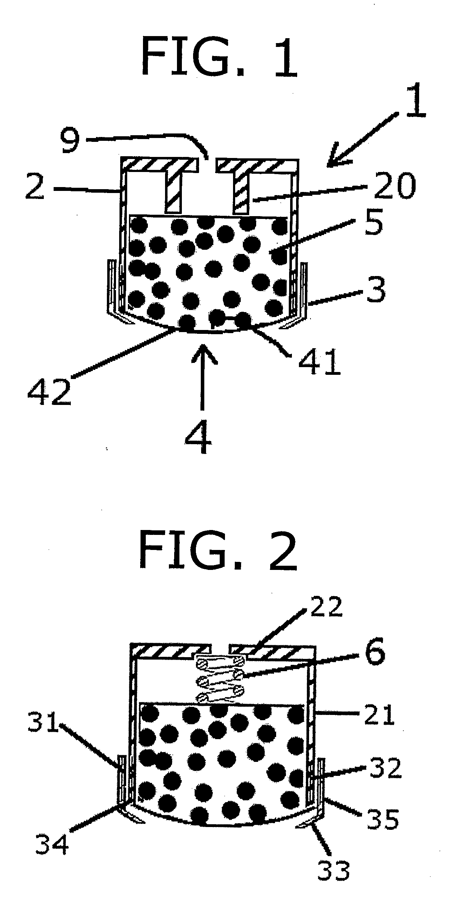

Figur 1 zeigt einen Schnitt durch einen einfachen Stempelkopf mit Distanzelement.
In Figur 2 ist eine Schnittzeichnung eines Stempelkopfes mit Tamponandrückelement abgebildet.

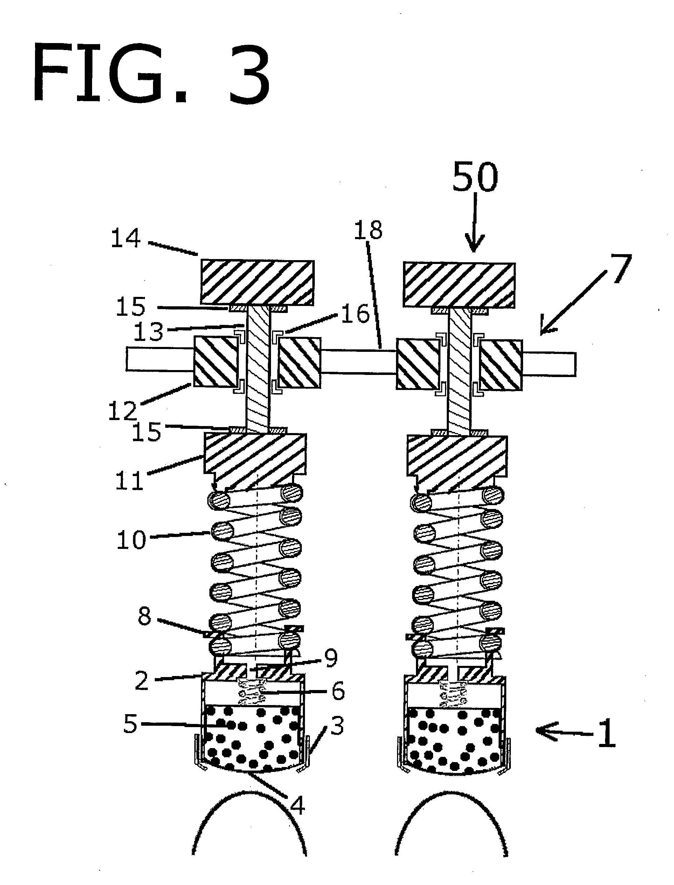

Figur 3 zeigt eine Stempelvorrichtung mit zwei Eierstempeln, die an einem horizontalen Stempelbalken befestigt sind.

In den anliegenden Zeichnung ist ein bevorzugtes Ausführungsbeispiel des Erfindungsgegenstandes dargestellt und anhand der nachfolgenden Beschreibung erläutert.

### Beschreibung

Der mehrteilige Stempelkopf 1 ist aus einer im einfachsten Fall zylindrisch geformten Stempelkammer 2 mit einer kreisförmigen Grundfläche aufgebaut, in deren Inneren ein Tampon 5 platziert ist, der die Stempelfarbe aufnimmt. Die Stempelkammer 2 wird durch einen zylindrische Wand 21 gebildet, die am oberen Ende durch eine Deckfläche 22 abgeschlossen ist. Die zylindrische Wand 21 und die Deckfläche 22 können aus einem Stück geformt sein, wie dies in der Figur gezeigt ist oder aus zwei Teilen, die miteinander fest verbunden oder zusammenfügbar verbunden sind.

Die Dicke des Tampons 5 kann maximal gleich der Tiefe der Stempelkammer 2 sein und damit das Volumen der Stempelkammer 2 vollständig ausfüllen. Der Tampon 5 wird aus einem offenporigem mikroporösen Material, wie beispielsweise Polyurethanschaum hergestellt, welches die Stempelfarbe aufsaugen und aufbewahren kann. Dabei kann die Fläche des Tampons 5, welche der Stempelkammer 2 abgewandt ist, eben sein, oder konkav (z.B. ellipsoidartig) geformt sein.

In der kreisförmigen Deckfläche 22 der Stempelkammer 2 befindet sich eine Belüftungs- und Nachfüllöffnung 9 in Form eines Durchgangsloches, das zum Druckausgleich während des Stempelvorganges und zum Nachfüllen der Stempelfarbe dienen kann. Das Befüllen der Stempelkammer 2 mit der Stempelfarbe kann damit ohne Demontage des Stempelkopfes 1 einfach und schnell durchgeführt werden. Um zu verhindern, das die Stempelfarbe durch die Belüftungs- und Nachfüllöffnung 9 entweicht, ist es vorteilhaft die Dicke des Tampons 5 etwas kleiner als die Tiefe der Stempelkammer 2 zu wählen und ein loses oder an der Kammer befestigtes Distanzelement 20 zu verwenden. Als loses Distanzelement kann beispielsweise eine eingelegte Spiralfeder dienen.
Unterhalb des Tampons 5 befindet sich ein Siebdruckplättchen 4, dessen Kammerseite 41 am Tampon 5 anliegt. Das Siebdruckplättchen 4 besteht aus einem flexiblen Kunststoff, der elastisch, dehnfähig und strapazierfähig ist.

Das Siebdruckplättchens 4 ist mit einer Sperrschicht aus einer lichtempfindlichen Photoemulsion oder einem lichtempfindlichen Film auf der Abgabeseite 42 beschichtet. Durch die Belichtung mit UV-Licht bilden lichtdicht abgedeckte Teile der Sperrschicht auswaschbare Durchlasskanäle, die eine Schablone für den späteren Druck bilden.

Die Sperrschicht kann von der Stempelfarbe durch die Durchlasskanäle von der Kammerseite 41 bis zur Andruckseite 42 gepresst werden und auf das Druckgut gelangen. Es sind unterschiedliche Stempelfarben mit verschiedenen Eigenschaften auf dem Markt erhältlich. Auch für den Lebensmittelbereich stehen Stempelfarben zur Verfügung, die neben den gewünschten Fliess- und Druckeigenschaften für den Druck auf Lebensmitteln auch eine Zulassung der Gesundheitsämter besitzen. Um ein Austrocknen zu verhindern verwendet man hier Stempelfarben auf öliger Basis.

Die Siebdruckplättchen 4 sollten kreisförmig geformt sein und eine erhabene Form haben, indem die Andruckseite 42 konvex, vom Tampon 5 weg gewölbt ist. Beim Druckvorgang senkt sich die Andruckseite 42 des Siebdruckplättchens 4 bis zum Kontakt mit der Oberfläche des zu bedruckenden Hühnereis und umschliesst diese, womit ein flächiges Bedrucken der konvexen Eioberfläche bei unterschiedlichsten Eigrössen und Eiformen gewährleistet ist

Der Durchmesser der Siebdruckplättchen 4 sollte grösser oder gleich dem Durchmesser der Deckfläche 22 der Stempelkammer 2 sein, damit das Siebdruckplättchen 4 an der Stempelkammer 2 fixierbar ist und diese überspannen kann, ohne, dass die Stempelfarbe am Rand des Siebdruckplättchens 4 vorbei auf das Druckgut entweichen kann. Zur Befestigung des Siebdruckplättchens 4 dient eine Siebdruckplättchenhalterung 3 mit einem Innengewinde 31, das auf ein Aussengewinde 32 der Stempelkammer 2 schraubbar ist, wodurch das Siebdruckplättchen 4 über den Tampon 5 und die Stempelkammer 2 gespannt wird. Das Siebdruckplättchen 4 muss gespannt sein, damit ein optimales Druckergebnis resultiert und die Stempelfarbe definiert durch die gespannt auf der gewölbten Oberfläche des Hühnereis liegenden Durchlasskanäle hindurchgepresst wird.

Die Siebdruckplättchenhalterung 3 hat eine Ringwand 35 mit dem erwähnten Innengewinde 31. Endständig ist eine radial nach innen gerichtete kragenförmige Andruckfläche 33 angeformt. Diese Andruckfläche 33 kann senkrecht zur Ringwand 35 verlaufen oder bevorzugter weise geneigt. Die Neigung der Andruckfläche entspricht in etwa der Wölbung des Siebdruckplättchens 4 entlang dessen Rand. Ebenso wird der Rand der zylindrischen Wand 21 dieser Neigung angepasst geformt oder ist mit einer gerundeten Andruckkante 34 gestaltet, so dass eine definierte linienförmige Auflage bei der Pressung erfolgt, ohne einen Verzug des Siebdruckplättchens 4 zu bewirken.

Das Siebdruckplättchen 4 wird folglich Andruckfläche 33 der Siebdruckplättchenhalterung 3 und der zylindrischen Wand 21 der Stempelkammer 2, unterhalb des Tampons 5, gespannt fixiert. Um das Siebdruckplättchen 4 zu spannen, muss der Durchmesser des Siebdruckplättchens 4 geringfügig grösser sein, als der Durchmesser der Stempelkammer 2, damit eine leichte Vorspannung entsteht, welche die konvexe Wölbung des Siebdruckplättchens 4 unterstützt. Neben der oben erwähnten Verschraubung 31, 32 kann die Siebdruckplättchenhalterung 3 auch auf der Stempelkammer 2 klemmend fixiert sein. Es ist damit eine form- sowie eine kraftschlüssige Verbindung von Stempelkammer 2 und Siebdruckplättchenhalterung 3 möglich.

Die Bauteile des Stempelkopfes 1, Stempelkammer 2 und die Siebdruckplättchenhalterung 3 können wahlweise aus Metall, Leichtmetall gefräst, im Spritzgussverfahren aus Kunststoff hergestellt oder aus flexiblem Kunststoff gefertigt sein.

Um sicher zu stellen, dass der Tampon 5 an der Kammerseite 41 des Siebdruckplättchens 4 anliegt und damit die Stempelfarbe, während des Druckvorganges durch die Durchlasskanäle, das Druckgut erreicht, kann ein Tamponandrückelement 6 in den Stempelkopf integriert werden. Dabei drückt das Tamponandrückelement 6 den Tampon 5 in Richtung der Längsachse des Stempelkopfes 1 gegen das gewölbte Siebdruckplättchen 4. Das Tamponandrückelement 6 kann beispielsweise in Form einer Schraubenfeder realisiert werden, die zwischen der Deckfläche 22 der Stempelkammer 2 und dem Tampon 5 platziert wird und durch eine Fräsung in der Deckfläche 22 der Stempelkammer 2 fixiert wird.

Der Aufbau eines Eierstempels 50 unter Benutzung des oben beschriebenen Stempelkopfes 1 kann aus dem Stempelkopf 1, einem Stempelandrückelement 10 und einer Stempelführungsanordnung 7 bestehen. Um den Stempelkopf 1 vertikal aufwärts und abwärts zu bewegen wird er an der Stempelführungsanordnung 7 befestigt. Die Befestigung geschieht über das Stempelandrückelement 10, welches eine gelenkige Verbindung darstellt und durch eine Schraubenfeder, ein einfaches gummielastisches Element oder eine Kardanwelle realisiert werden kann. In einer weiteren Ausführungsform kann das Stempelandrückelement 10 als Kugelgelenk ausgebildet sein, an dessen Kugel der Stempelkopf 1 montiert ist.

Das Stempelandrückelement 10 erlaubt es dem Stempelkopf beliebig zu neigen, um eine korrekte Stempelung einer geneigten Fläche des zu stempelnden Gutes bzw. der Eierschale sicherzustellen.

Wenn eine Schraubenfeder als Stempelandrückelement 10 benutzt wird, so ist es sinnvoll eine Befestigungswulst 8 an der Stempelkammer 2 bereit zu stellen, damit das Stempelandrückelement 10 nicht ungewollt von der Stempelkammer 2 abrutscht. Auf der, dem Stempelkopf 2 gegenüberliegenden Seite ist das Stempelandrückelement 10 an einem Stempelandrückgewicht 11 befestigt, welches das Stempelandrückelement 10 samt Stempelkopf 1 auf das Hühnerei drückt. Die Anpresskraft des Stempelkopfes 1 auf das Ei ist durch das Gewicht des Stempelandrückgewichtes 11 definiert und damit immer gleich. Das Stempelandrückgewicht 11 ist an einem Führungsstab 13 befestigt, der durch ein Stempelbefestigungselement 12 läuft. Um eine ruhige und fehlerfreie lineare Bewegung zu erreichen ist es zweckmässig, eine Lagerbohrung 17 im Stempelbefestigungselement 12 mit einer Kunststofflagerbuchse 16 vorzusehen. Die, durch den Führungsstab 13 geführte lineare Bewegung, hat senkrecht zur Längsachse des Führungsstabes 13 Spiel, da ein nicht starres Stempelandrückelement 10 verwendet wird. Mit diesen Mitteln ist eine linear geführte Auf- und Abwärtsbewegung des Stempelkopfes 1 mit kontrollierter Anpresskraft zu erreichen, die den Durchdruckvorgang auf der Hühnereioberfläche reproduzierbar durchführt.
Die Abwärtsbewegung des Eierstempels 50 wird durch einen Bewegungsbegrenzer 14, am oberen Ende des Führungsstabes 13 begrenzt, der nahezu beliebig ausgebildet sein kann. Dämpfungsringe 15 an den, dem Führungsstab 13 zugewiesenen Flächen des Stempelandrückgewichtes 11 und des Bewegungsbegrenzers 14 sorgen für ein gedämpftes Stoppen der Auf- und Abwärtsbewegung. Um gleichzeitig mehrere Hühnereier zu bedrucken, können mehrere Eierstempel 50 an einem Stempelbalken 18 in Serie angeordnet werden. Dazu müssen die jeweiligen Stempelbefestigungselemente 12 der Eierstempel 50 am Stempelbalken 18 montiert werden. Dies kann einzeilig für Eierhöckerkartons oder sogar mehrzeilig geschehen, so, dass direkt alle Hühnereier in einer 6er, 10er oder 12er Schachtel gleichzeitig bedruckt werden können. Ebenso können Geflügeleier in Haltevorrichtungen auf Eiertransportanlagen bedruckt werden.
Der Stempelbalken 18 muss kontrolliert vertikal auf und ab bewegt werden, um den Druckvorgang durchzuführen. Die Stempelköpfe 1 der verschiedenen Eierstempel 50 heben und senken sich dabei.

Die Länge des Führungsstabes 13 ist so ausgelegt, dass beim Fehlen eines Eies im Eierhöckerkartons der Stempelkopf 1 nicht auf den Karton herunter gelangen kann. Zu dem soll aber auch sichergestellt sein, dass bei einem grösstdenkbaren Ei das Stempefandrückgewicht 11 nicht am Stempelbefestigungselement zum anliegen kommt, wenn bei einer Stempelbewegung der Stempelbalken 18 in seiner tiefsten Lage abgesetzt ist.

Die Anpresskraft eines Eierstempels 50 bzw. des Stempelkopfes 1 wird durch das zugehörige Stempelandrückgewicht 11 bestimmt. Die Form des Siebdruckplättchens 4 passt sich bei Kontakt der Eioberfläche an und wölbt sich konkav in Richtung Stempelkammer 2 und taucht teilweise in diese ein. Dabei liegt die Siebdruckplättchenoberfläche vollflächig auf dem Ei auf und das Druckmotiv wird übertragen.
Der Druckvorgang wird durch das gelenkige Stempelandrückelement 11 kontrolliert, ohne die Eioberfläche zu beschädigen.
Um Stempelfarbe nachzufüllen muss der Druckvorgang nur kurz unterbrochen werden, damit die Stempelfarbe durch die Belüftungs-und Nachfüllöffnung 9 nachgefüllt werden kann. Da das Siebdruckplättchen 4 leicht vom Stempelkopf 1 entfernt werden kann, ist, zum Wechsel des Druckmotives und im Falle des Verschleisses des Siebdruckplättchens 4 durch intensive Gebrauch, ein schneller Austausch möglich. Der Eierstempel 50 kann darum nach sehr kurzer Stillstandszeit wieder betrieben werden.

Neben dem Druckvorgang durch die Bewegung des Eierstempels 50 auf die Eioberfläche, kann der Druckvorgang durch die Bewegung des zu bedruckenden Eies, durch das Pressen des Eies entgegen dem Stempelkopf 1 des Eierstempels 50 durchgeführt werden.

Der hier sehr robust und aufwendig ausgestaltete Stempelkopf 1 ist ein hochwertiges, langlebiges Element in dem die preiswerten Siebdruckplättchen 4 leicht und schnell auswechselbar sind. Wie erwähnt ist auch die Stempelfarbe problemlos und schnell nachfüllbar. Der teuere Stempelkopf 1 ist dafür sehr bedienungsfreundlich und alle Verbrauchsmaterialien sind preiswert und ohne lange Unterbrechungszeit der Stempelmaschine auswechselbar.
Der Stempelkopf 1 lässt sich herkömmlich als Drehteil aus Metall fertigen, was sowohl für die Stempelkammer 2 als auch für die Siebdruckplättchenhalterung 3 zutrifft. Beide Teile können jedoch auch aus einem flexiblen Kunststoff, sowie aus Kunststoff spritzgusstechnisch oder aus gewissen Metalllegierungen druckgusstechnisch gefertigt werden.

**Bezugszeichenliste**

| | |
|---|---|
| 1 | Stempelkopf |
| 2 | Stempelkammer |
| 3 | Siebdruckplättchenhalterung |
| 4 | Siebdruckplättchen |
| 5 | Tampon |
| 6 | Tamponandrückelement (optional) |
| 7 | Stempelführungsanordnung |
| 8 | Befestigungswulst für Stempelandrückelement |
| 9 | Belüftungs- und Nachfüllöffnung |
| 10 | Stempelandrückelement |
| 11 | Stempelandrückgewicht |
| 12 | Stempelbefestigungselement |
| 13 | Führungsstab |
| 14 | Bewegungsbegrenzer |
| 15 | Dämpfungsring |
| 16 | Kunststofflagerbuchse |
| 17 | Lagerbohrung (in 12) |
| 18 | Stempelbalken |
| 20 | Distanzelement |
| 41 | Kammerseite |
| 42 | Andruckseite |
| 50 | Eierstempel |
| 21 | zylindrische Wand der Stempelkammer |
| 22 | Deckfläche der Stempelkammer |
| 31 | Innengewinde der Siebdruckplättchenhalterung |
| 32 | Aussengewinde an der zylindrischen Wand 21 der Stempelkammer |
| 33 | Andruckfläche an der Siebdruckplättchenhalterung |
| 34 | Andruckkante an der zylindrischen Wand 21 |
| 35 | Ringwand der Siebdruckplättchenhalterung |

## Patentansprüche

1. Stempelkopf zum Bedrucken von unebenen Oberflächen, insbesondere von Agrarprodukten, wie Geflügeleiern im Durchdruckverfahren, in welchem ein Tampon (5) mit einer Stempelfarbe untergebracht ist und der durch ein Siebdruckplättchen (4) abgeschlossen ist, der Stempelkopf (1) mehrteilig ist und eine Stempelkammer (2) aus einer zylindrischen Wand (21) mit einer Deckfläche (22) umfasst, welche Stempelkammer (2) den Tampon (5), beinhaltet und durch das Siebdruckplättchen (4), dessen Kammerseite (41) am Tampon (5) anliegt und welches auswechselbar mittels einer Siebdruckplättchenhalterung (3) in der Form einer Ringwand (35) mit radial nach innen gerichteter Andruckfläche (33) am Stempelkopf (1) befestigt ist, verschliessbar ist.

2. Stempelkopf nach Anspruch 1, **dadurch gekennzeichnet, dass** die Stempelkammer (2) und die Siebdruckplättchenhalterung (3) form- und/oder kraftschlüssig verbunden sind.

3. Stempelkopf nach Anspruch 1, **dadurch gekennzeichnet, dass** die Stempelkammer (2) und/oder die Siebdruckplättchenhalterung (3) aus einem flexiblen Kunststoff gefertigt sind.

4. Stempelkopf nach Anspruch 1, **dadurch gekennzeichnet, dass** die Stempelkammer (2) und die Siebdruckplättchenhalterung (3) aus einem geeigneten Metall im Druckgussverfahren hergestellt sind.

5. Stempelkopf nach Anspruch 1, **dadurch gekennzeichnet, dass** die Deckfläche (22) der Stempelkammer (2) mit einer Belüftungs- und Nachfüllöffnung (9) ausgestattet ist.

6. Stempelkopf nach Anspruch 1, **dadurch gekennzeichnet, dass** im Inneren der Stempelkammer (2) ein Tamponandrückelement (6) angeordnet ist, welches den Tampon (5) gegen das Siebdruckplättchen (4) presst.

7. Stempelkopf nach Anspruch 6, **dadurch gekennzeichnet, dass** die Deckfläche (22) der Stempelkammer (2) eine konzentrische Fräsung zur Aufnahme des Tamponandrückelementes (6) im Inneren der Stempelkammer (2) beinhaltet.

8. Stempelkopf nach Anspruch 7, **dadurch gekennzeichnet, dass** das Tamponandrückelement (6) eine Schraubenfeder ist.

9. Eierstempelvorrichtung mit mindestens einem Stempelkopf (1) nach mindestens einem der Ansprüche 1 bis 8, **dadurch gekennzeichnet, dass** der mindestens eine Stempelkopf (1) mit einem Stempelandrückelement (10) an einer Stempelführungsanordnung (7) und mit dieser an einem Stempelbalken (18) befestigt ist und vertikal bewegbar ist.

10. Eierstempelvorrichtung nach Anspruch 9, **dadurch gekennzeichnet, dass** das Stempelandrückelement (10) als Kugelgelenk ausgebildet ist, an dessen Kugel der Stempelkopf 1 montiert ist.

11. Eierstempelvorrichtung nach Anspruch 9, **dadurch gekennzeichnet, dass** das Stempelandrückelement (10) eine Schraubenfeder ist.

12. Eierstempelvorrichtung nach Anspruch 9, **dadurch gekennzeichnet; dass** das Stempelandrückelement (10) ein gummielastisches Element ist.

13. Eierstempelvorrichtung nach Anspruch 9, **dadurch gekennzeichnet, dass** das Stempelandrückelement (10) eine Kardanwelle ist.

14. Eierstempelvorrichtung nach Anspruch 9, **dadurch gekennzeichnet, dass** die Stempelführungsanordnung (7) ein Stempelandrückgewicht (11) und einen Bewegungsbegrenzer (14), an den beiden gegenüberliegenden Enden eines Führungsstabes (13) befestigt, umfasst.

15. Eierstempelvorrichtung nach mindestens einem der Ansprüche 9 bis 14, **dadurch gekennzeichnet, dass** die Stempelführungsanordnung (7) mit einem Stempelbefestigungselement (12) an dem Stempelbalken (18) befestigt ist.

## Claims

1. A stamping head for printing irregular surfaces, in particular of agricultural products such as poultry eggs using the screen printing method, in which a pad (5) with a stamping ink is accommodated and which is closed off by a screen printing platelet (4), the stamping head (1) being of multiple parts and having a stamping chamber (2) of a cylindrical wall (21) with a cover surface (22), which stamping chamber (2) contains the pad (5) and can be closed off by the screen printing platelet (4) whose chamber side (41) bears against the pad (5) and which is replaceably fastened to the stamping head (1) by means of a screen printing platelet holder (3) in the form of an annular wall (35) with a contact surface (33) radially directed to the inside.

2. The stamping head according to Claim 1, **characterized in that** the stamping chamber (2) and the screen printing platelet holder (3) are positively and/or non-positively connected.

3. The stamping head according to Claim 1, **characterized in that** the stamping chamber (2) and/or the screen printing platelet holder (3) are produced from a flexible plastic.

4. The stamping head according to Claim 1, **characterized in that** the stamping chamber (2) and the screen printing platelet holder (3) are produced from a suitable metal using the die casting method.

5. The stamping head according to Claim 1, **characterized in that** the cover surface (22) of the stamping chamber (2) is equipped with a ventilation and refilling opening (9).

6. The stamping head according to Claim 1, **characterized in that** in the interior of the stamping chamber (2) a pad pressure element (6) is arranged, which presses the pad (5) against the screen printing platelet (4).

7. The stamping head according to Claim 6, **characterized in that** the cover surface (22) of the stamping chamber (2) contains a concentric milled portion for receiving the pad pressure element (6) in the interior of the stamping chamber (2).

8. The stamping head according to Claim 7, **characterized in that** the pad pressure element (6) is a coil spring.

9. An egg stamping device having at least one stamping head (1) according to at least one of the Claims 1 to 8, **characterized in that** the at least one stamping head (1) with a stamp pressure element (10) is fastened to a stamp guiding arrangement (7) and with the latter to a stamping beam (18) and is vertically movable.

10. The egg stamping device according to Claim 9, **characterized in that** the stamp pressure element (10) is embodied as a ball joint, on the ball of which the stamping head 1 is mounted.

11. The egg stamping device according to Claim 9, **characterized in that** the stamp pressure element (10) is a coil spring.

12. The egg stamping device according to Claim 9, **characterized in that** the stamp pressure element (10) is a rubber-elastic element.

13. The egg stamping device according to Claim 9, **characterized in that** the stamp pressure element (10) is a cardan shaft.

14. The egg stamping device according to Claim 9, **characterized in that** the stamp guiding arrangement (7) comprises a stamp pressure weight (11) and a movement limiter (14) fastened to the two opposite ends of a guide rod (13).

15. The egg stamping device according to at least one of the Claims 9 to 14, **characterized in that** the stamp guiding arrangement (7) is fastened to the stamping beam (18) with a stamp fastening element (12).

## Revendications

1. Tête de tampon pour l'impression de surfaces inégales, en particulier de produits agraires comme des oeufs de volaille, par un procédé de sérigraphie, dans laquelle est logé un tampon (5) avec une encre de tampon, et laquelle est fermée par une plaque de sérigraphie (4), la tête de tampon (1) est en plusieurs parties et comprend une chambre de tampon (2) faite d'une paroi cylindrique (21) avec une surface de couverture (22), laquelle chambre de tampon (2) contient le tampon (5) et peut être fermée par la plaque de sérigraphie (4) dont le côté chambre (41) repose sur le tampon (5) et laquelle est fixée sur la tête de tampon (1) de manière amovible via une fixation de plaque de sérigraphie (3) sous forme d'une paroi circulaire (35) avec une surface d'appui (33) dirigée radialement vers l'intérieur.

2. Tête de tampon selon la revendication 1, **caractérisée en ce que** la chambre de tampon (2) et la fixation de plaque de sérigraphie (3) sont reliées ensemble par complémentarité des formes et/ou adhérence des forces.

3. Tête de tampon selon la revendication 1, **caractérisée en ce que** la chambre de tampon (2) et/ou la fixation de plaque de sérigraphie (3) sont fabriquées dans un plastique flexible.

4. Tête de tampon selon la revendication 1, **caractérisée en ce que** la chambre de tampon (2) et la fixation de plaque de sérigraphie (3) sont fabriquées dans un métal approprié par moulage sous pression.

5. Tête de tampon selon la revendication 1, **caractérisée en ce que** la surface de couverture (22) de la chambre de tampon (2) est dotée d'une ouverture d'aération et de remplissage (9).

6. Tête de tampon selon la revendication 1, **caractérisée en ce qu'**un élément d'appui de tampon (6) est disposé à l'intérieur de la chambre de tampon (2), lequel appuie le tampon (5) contre la plaque de sérigraphie (4).

7. Tête de tampon selon la revendication 6, **caractérisée en ce que** la surface de couverture (22) de la chambre de tampon (2) comporte un fraisage concentrique pour recevoir l'élément d'appui de tampon (6) à l'intérieur de la chambre de tampon (2).

8. Tête de tampon selon la revendication 7, **caractérisée en ce que** l'élément d'appui de tampon (6) est un ressort hélicoïdal.

9. Dispositif de tampons à oeufs comprenant au moins une tête d'impression (1) selon au moins l'une des revendications 1 à 8, **caractérisé en ce que** l'au moins une tête d'impression (1) est fixée avec un élément d'appui de tampon (10) sur un dispositif de guidage de tampon (7) et est fixée avec celui-ci sur une barre de tampon (18) et est mobile verticalement.

10. Dispositif de tampons à oeufs selon la revendication 9, **caractérisé en ce que** l'élément d'appui de tampon (10) est formé en tant qu'articulation sphérique, sur la bille de laquelle la tête de tampon (1) est montée.

11. Dispositif de tampons à oeufs selon la revendication 9, **caractérisé en ce que** l'élément d'appui de tampon (10) est un ressort hélicoïdal.

12. Dispositif de tampons à oeufs selon la revendication 9, **caractérisé en ce que** l'élément d'appui de tampon (10) est un élément élastique.

13. Dispositif de tampons à oeufs selon la revendication 9, **caractérisé en ce que** l'élément d'appui de tampon (10) est un arbre à cardan.

14. Dispositif de tampons à oeufs selon la revendication 9, **caractérisé en ce que** le dispositif de guidage de tampon (7) comprend un poids d'appui de tampon (11) et un limiteur de mouvement (14) fixés sur les deux extrémités opposées d'une tige de guidage (13).

15. Dispositif de tampons à oeufs selon au moins l'une des revendications 9 à 14, **caractérisé en ce que** le dispositif de guidage de tampon (7) est fixé sur la barre de tampon (18) par un élément de fixation de tampon (12).
